Europäisches Patentamt

(19) European Patent Office

Office européen des brevets

(11) Numéro de publication: **0 069 626**
**B1**

(12) **FASCICULE DE BREVET EUROPEEN**

(51) Int. Cl.⁴: **B 62 M 9/12**

(45) Date de publication du fascicule du brevet:
02.10.85

(21) Numéro de dépôt: **82401146.4**

(22) Date de dépôt: **22.06.82**

(54) Dispositif de montage d'un dérailleur sur la patte de cadre d'un cycle.

(30) Priorité: **03.07.81 FR 8113117**

(43) Date de publication de la demande:
**12.01.83 Bulletin 83/2**

(45) Mention de la délivrance du brevet:
**02.10.85 Bulletin 85/40**

(84) Etats contractants désignés:
**BE DE GB IT LU NL**

(56) Documents cités:
**FR - A - 998 134**
**FR - A - 1 106 044**
**FR - A - 2 427 243**
**GB - A - 888 511**

(73) Titulaire: **HURET ET SES FILS Société dite:, 60 Avenue Félix Faure, F-92000 Nanterre (FR)**

(72) Inventeur: **Coue, Maurice Emmanuel Louis, 6, Résidence du Vieux Puits, F-78810 Feucherolles (FR)**

(74) Mandataire: **Lavoix, Jean et al, c/o Cabinet Lavoix 2, Place D'Estienne D'Orves, F-75441 Paris Cedex 09 (FR)**

BUNDESDRUCKEREI BERLIN

## Description

La présente invention a pour objet un dispositif pour le montage, sur la patte de cadre d'un cycle, d'un dérailleur qui est articulé autour d'un axe, parallèle à l'axe de roue et porté par la patte de cadre, et est sollicité vers une position de travail définie par le contact d'une butée solidaire du dérailleur avec une surface d'appui fixe par rapport à la patte de cadre.

Dans un cycle équipé d'un tel dispositif, connu notamment par le brevet FR-A-2 427 243, au nom de la demanderesse, il est possible lorsqu'on veut démonter la roue arrière de faire pivoter le dérailleur vers le bas, mais il faut alors retenir à la main le dérailleur basculé hors de sa position de travail pendant l'opération de démontage de la roue. Cette contrainte, non seulement crée une gêne pour le cycliste, mais encore tend à allonger la durée d'immobilisation du cycle due aux crevaisons, ce qui est un inconvénient sérieux lorsque le cycle est engagé dans une compétition.

Pour remédier à ces inconvénients l'invention propose de réaliser un dispositif du genre mentionné au début, caractérisé en ce qu'au cours du déplacement angulaire du dérailleur dans le sens qui écarte la butée de la surface d'appui, la butée coopère avec des moyens, fixes par rapport à la patte de cadre, qui sont adaptés pour retenir élastiquement la butée dans une position escamotée pour laquelle le dérailleur est espacé de sa position de travail et immobilisé, ce qui dégage l'accès à l'axe de la roue arrière monté sur la patte de cadre.

Grâce à cet agencement le cycliste garde les deux mains libres pendant qu'il procède à des opérations de démontage et de remontage de la roue arrière. Le retour du dérailleur en position de travail est évidemment obtenu par une poussée sur le dérailleur, qui surmonte la retenue élastique exercée sur la butée.

Suivant une autre caractéristique de l'invention, la butée est, dans la position de travail et du côté opposé à la surface d'appui, adjacente à une surface d'arrêt formée dans une lame élastique d'orientation générale circonférentielle par rapport à l'axe d'articulation du dérailleur, qui est solidaire de la patte et délimite par sa concavité un logement dans lequel peut être retenue la butée lors de son déplacement dans le sens qui l'écarte de la surface d'appui, sous l'effet de la déformation et du franchissement de la surface d'arrêt dus à la poussée circonférentielle exercée par la butée.

La surface d'arrêt est avantageusement constituée par le flanc extrême, formant rampe, d'une bosse terminale de la lame élastique, au contact de laquelle le glissement de la butée provoque une déformation de la lame permettant le passage de la butée, suivie d'un retour élastique de la lame assurant la retenue. L'action de la butée sur l'autre flanc de la bosse, à partir de sa position de retenue, produit évidemment, par déformation élastique, un dégagement de la butée et un retour du dérailleur en position de travail.

De façon classique le câble qui est relié à la partie mobile du dérailleur, pour commander les changements de rapport, est ou bien monté à l'intérieur d'une gaine dont l'extrémité correspondante est en butée sur la partie fixe du dérailleur, ou bien à l'état nu, auquel cas il est prévu une gouttière de guidage du câble, fixe par rapport à la patte de cadre, ainsi que des moyens de retenue pour empêcher l'ensemble du dérailleur de pivoter autour de son articulation lorsqu'une traction est appliquée sur le câble pour changer le rapport. Suivant l'invention, cette fonction de retenue à l'égard de la partie fixe du dérailleur est assurée directement par la surface d'arrêt de la lame élastique.

L'invention sera explicitée au cours de la description qui va suivre, en référence aux dessins annexés, dans lesquels:

— la fig. 1 est une vue éclatée d'un dispositif suivant l'invention pour le montage d'un dérailleur sur une patte de cadre;

— la fig. 2 est une vue en élévation d'une pièce de retenue à lame élastique;

— la fig. 3 est une vue schématique partielle d'un dérailleur monté pivotant sur une patte de cadre, en position escamotée, commandé par un câble guidé dans une gouttière;

— la fig. 4 est une vue en coupe suivant la ligne 4-4 de la fig. 3 du guide-câble à gouttière.

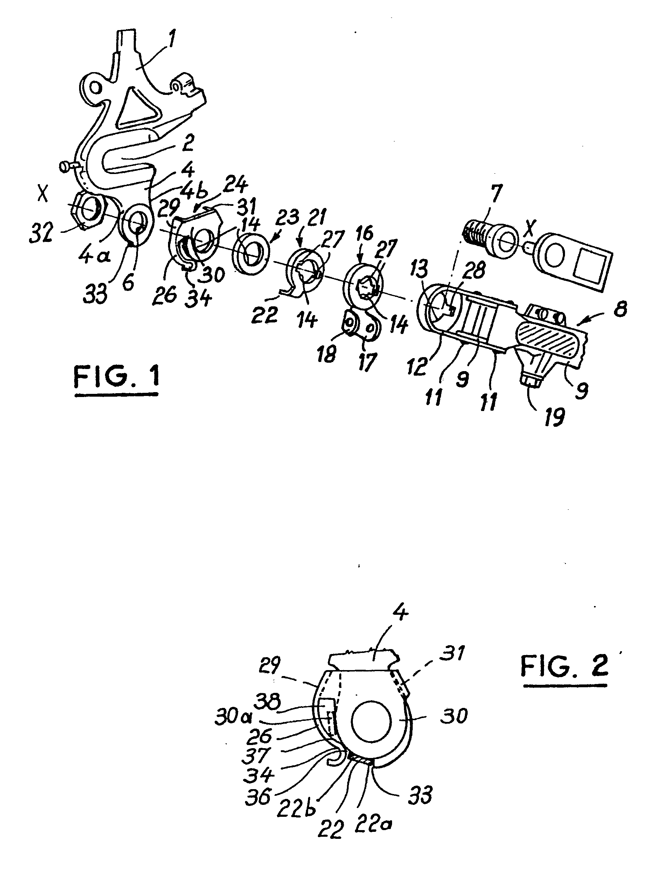

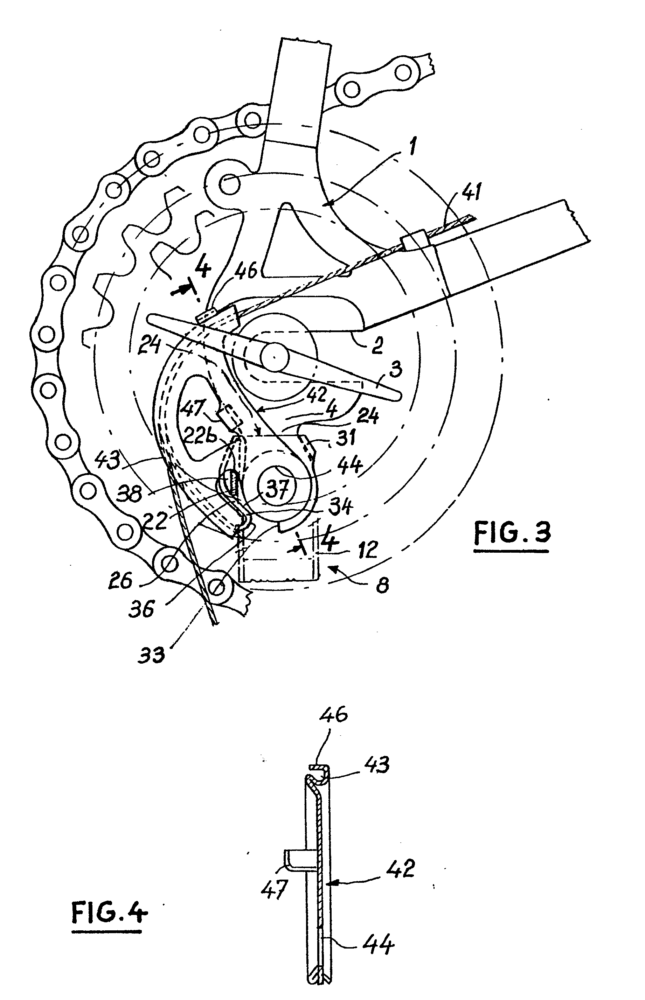

La patte de cadre 1 de cycle, représentée aux fig. 1 et 3, qui comporte une encoche 2 pour la réception de l'axe de la roue arrière du cycle, fixé par exemple au moyen d'écrous-papillons 3, se prolonge vers le bas en formant un plateau 4 dans lequel est percée une ouverture taraudée 6 destinée à recevoir une vis 7 d'axe géométrique XX, constituant l'axe de montage pivotant d'un dérailleur représenté partiellement en 8.

Dans l'exemple représenté, ce dérailleur est à parallélogramme articulé et comporte à cet effet deux bras parallèles 9 articulés par des axes 11 sur les deux autres côtés du parallélogramme, dont l'un 12, en forme d'étrier, seul représenté, peut être considéré comme fixe, et dont l'autre supporte, de façon connue, un galet guide-chaîne et un galet de tension de chaîne par l'intermédiaire d'une chape.

L'axe d'articulation 7 du dérailleur qui est retenu dans l'étrier 12 traverse successivement une ouverture circulaire 13 de cet étrier, et un empilage d'éléments de forme générale plane, qui à cet effet comportent chacun une ouverture centrale 14, à savoir:

— une rondelle de guidage 16 qui comporte deux pattes 17 et 18, pourvues d'orifices en coïncidence, prévues respectivement pour le guidage du câble de commande du dérailleur, non représenté à la fig. 1, qui est accroché à l'un des bras 9 au moyen d'une vis 19, et pour servir de butée à la gaine de ce câble;

— une rondelle de butée 21, à la périphérie de laquelle est formée une languette 22, coudée à 90°;

— une rondelle de friction 23;

— une pièce de retenue 24 qui porte une lame élastique 26, d'orientation générale circonférentielle.

La rondelle de guidage 16 et la rondelle de butée 21 sont immobilisées par rapport à l'étrier fixe 12 du dérailleur au moyen de doigts 27 venant se loger dans des encoches 28 formées à la périphérie de l'ouverture 13.

Quant à la pièce de retenue 24 elle est solidarisée avec la patte de cadre 1 et sa partie plane 30 comporte à cet effet deux rebords latéraux 29, 31 appliqués sur les deux bords correspondants 4a, 4b du plateau 4 de la patte de cadre 1, le rebord 29 constituant l'amorce du ressort périphérique 26.

A l'état assemblé l'axe 7 est vissé dans le taraudage de l'ouverture 6 du plateau 4 et est bloqué par un contre-écrou 32.

Le serrage de la vis 7, formant axe de montage, dans l'ouverture taraudée 6 est réalisé de manière telle que le dérailleur 8 puisse pivoter autour de cet axe de manière à prendre, soit la position normale de travail correspondant à la fig. 1, soit une position escamotée, décalée dans le sens des aiguilles d'une montre par rapport à la position de travail, pour permettre l'enlèvement de la roue arrière du cycle.

Dans la position de travail, le dérailleur, sollicité par la tension de la chaîne dans le sens contraire à celui des aiguilles d'une montre (fig. 1 à 3), est retenu par le contact du bord axial correspondant 22a de la languette 22 de la rondelle de butée 21 avec une surface d'appui radiale 33 du plateau 4, définie par un redan formé dans la partie inférieure de la périphérie de ce plateau. L'autre bord axial, 22b, de la languette 22 est alors directement adjacent à une surface d'arrêt définie par l'extrémité 34, roulée en forme de bosse, du ressort 26 de la pièce de retenue 24. De part et d'autre de son point de contact avec le contour circulaire 30a de la partie plane 30 de cette pièce, la bosse 34 forme deux rampes de sens opposé 36, 37, de sorte que lorsque le dérailleur est déplacé à la main, à partir de la position de travail, dans le sens des aiguilles d'une montre, le bord de languette 22b attaque la surface d'arrêt constituée par la rampe 36, en repoussant radialement vers l'extérieur la bosse 34, que franchit alors la languette 22, finalement retenue par la rampe 37 à l'intérieur du logement 38 délimité par la concavité du ressort 26 et le bord circulaire 30a, dans la position, représentée en trait interrompu à la fig. 2 et en trait plein à la fig. 3, pour laquelle le dérailleur est escamoté.

Le retour en position de travail peut évidemment être obtenu moyennant une poussée circonférentielle exercée, dans le sens contraire aux aiguilles d'une montre sur le dérailleur, dont l'effet est de surmonter l'action de retenue élastique produite par la bosse 34.

Dans la variante de la fig. 3, qui correspond à la position escamotée du dérailleur, la commande de ce dernier est assurée par un câble 41 dépourvu de gaine, de sorte que la rondelle de guidage 16 est supprimée et remplacée par un guide-câble 42 fixé sur la patte de cadre 1 et comportant un bord 43 profilé en gouttière dans lequel passe le câble de commande 41. Le guide-câble 42 comporte une ouverture circulaire 44 que traverse l'axe d'articulation 7 et une saillie de positionnement 47 qui est appliquée au contact du bord adjacent de la patte de cadre. Une autre saillie, 46, est prévue sur le guide-câble 42 pour empêcher le câble 41 de s'échapper de la gouttière 43 lorsqu'il a pris du mou dans la position escamotée du dérailleur représentée à la fig. 3.

On notera que dans la position de travail du dérailleur de la fig. 3 toute traction exercée sur le câble 1 par la manette d'actionnement, non représentée, tend à solliciter l'ensemble du dérailleur dans le sens des aiguilles d'une montre, de sorte que le bord de languette 22b appliqué contre la rampe 36 de la bosse 34 constitue un point d'appui pour la partie fixe du dérailleur, dont la partie mobile peut alors répondre à la traction du câble en produisant le changement de rapport voulu.

Bien entendu le plateau 4 dans lequel est fixé l'axe de montage 7 du dérailleur pourrait faire partie d'un support distinct de la patte de cadre 1 et fixé sur cette patte.

**Revendications**

1. Dispositif pour le montage, sur la patte (1) de cadre d'un cycle, d'un dérailleur (8) qui est articulé autour d'un axe, parallèle à l'axe (X-X) de roue et porté par la patte de cadre, et est sollicité vers une position de travail définie par le contact d'une butée solidaire (22) du dérailleur avec une surface d'appui (33) fixe par rapport à la patte de cadre, caractérisé en ce qu'au cours du déplacement angulaire du dérailleur (8) dans le sens qui écarte la butée (22) de la surface d'appui (33), la butée coopère avec des moyens (34, 26), fixes par rapport à la patte de cadre, qui sont adaptés pour retenir élastiquement la butée (22) dans une position escamotée pour laquelle le dérailleur est espacé de sa position de travail et immobilisé, ce qui dégage l'accès à l'axe de la roue arrière monté sur la patte de cadre (1).

2. Dispositif suivant la revendication 1, caractérisé en ce que dans la position de travail la butée est, du côté opposé à la surface d'appui, adjacente à une surface d'arrêt (36) formée dans une lame élastique (26) d'orientation générale circonférentielle par rapport à l'axe d'articulation (7) du dérailleur (8), qui est solidaire de la patte (1) et délimite par sa concavité un logement (38) dans lequel peut être retenue la butée (22) lors de son déplacement dans le sens qui l'écarte de la surface d'appui (33), sous l'effet de la déformation et du franchissement de la surface d'arrêt dus à la poussée circonférentielle exercée par la butée.

3. Dispositif suivant la revendication 2, caractérisé en ce que la surface d'arrêt est constituée par l'un des flancs (36), formant rampes, d'une bosse (34) formée sur la lame élastique (26), au contact desquelles le glissement de la butée (22), dans un sens ou dans l'autre, provoque une déformation de la lame permettant le passage de la butée.

4. Dispositif suivant l'une des revendications 2 et 3, caractérisé en ce que la lame élastique (26) est portée par une pièce de retenue (24), fixée à la patte de cadre (1) ou à un support solidaire de cette patte, qui est traversée par l'axe d'articulation (X-X) du dérailleur (8).

5. Dispositif suivant l'une des revendications 1 à 4, caractérisé en ce que la butée est constituée par une languette (22) formée sur la périphérie d'une rondelle (21) traversée par l'axe d'articulation (X-X) du dérailleur (8).

6. Dispositif suivant l'une des revendications 1 à 5, caractérisé en ce qu'une gouttière (43), fixe par rapport à la patte de cadre (1), étant prévue pour le guidage du câble nu (41) commandant la partie mobile (9) du dérailleur (8), la surface d'arrêt (36) a, dans la position de travail, une fonction de retenue à l'égard de la partie fixe (12) du dérailleur.

7. Dispositif suivant la revendication 6, caractérisé en ce que la gouttière (43) de guidage du câble (41) est formée dans une pièce traversée par l'axe d'articulation (X-X) du dérailleur (8).

## Patentansprüche

1. Einrichtung für die Montage eines Kettenschaltorgans (8) am Haltelappen (1) eines Fahrradrahmens, wobei das Schaltorgan um eine zur Achse (x-x) des Rades parallele Achse schwenkbar ist und von dem Haltelappen des Rahmens gehalten wird, und wobei ferner das Schaltungsorgan in eine Arbeitsstellung gedrückt wird, welche durch die Anlage eines am Schaltorgan fest angeordneten Anschlages (22) gegen eine bezüglich des Haltelappens des Rahmens feste Anschlagfläche bestimmt ist, dadurch gekennzeichnet, daß während der Winkelverstellung des Schaltorgans (8) in der Richtung, in der der Anschlag (22) von der Anschlagfläche (33) abgehoben wird, dieser Anschlag mit bezüglich des Haltelappens des Rahmens festen Mitteln (34, 26) zusammenwirkt, welche den Anschlag (22) elastisch in einer zurückgeschwenkten Lage festhalten, in der das Schaltorgan aus seiner Arbeitslage entfernt und arretiert ist, so daß der Zugang zu der Achse des am Haltelappen des Rahmens montierten Hinterrades freigegeben wird.

2. Einrichtung nach Anspruch 1, dadurch gekennzeichnet, daß in der Arbeitsstellung der Anschlag mit seiner der Anschlagfläche abgewandten Seite einer Arretierungsfläche (36) gegenüberliegt, die an einer elastischen Lamelle (26) mit einer im wesentlichen die Schwenkachse (7) des Schaltorgans (8) kreisförmig umgebenden Anordnung ausgebildet ist, wobei die Lamelle mit dem Haltelappen (1) fest verbunden ist und mit ihrer konkaven Seite eine Ausnehmung (38) bildet, in welcher der Anschlag (22) während seiner Bewegung in der Richtung, bei der er von der Anschlagfläche (33) abgehoben wird, aufgenommen wird.

3. Einrichtung nach Anspruch 2, dadurch gekennzeichnet, daß die Anschlagfläche (33) durch eine der rampenbildenden Flanken (36) eines an der elastischen Lamelle (26) angeformten Hakens (34) gebildet wird, wobei bei einer Verschiebung des Anschlages (22) in der einen oder der anderen Richtung durch dessen Kontakt mit diesen Flanken eine Deformation der Lamellen verursacht, welche einen Durchtritt des Anschlages ermöglicht.

4. Einrichtung nach einem der Ansprüche 2 oder 3, dadurch gekennzeichnet, daß die elastische Lamelle (26) von einem Haltestück (24) gehalten wird, welches am Haltelappen (1) des Rahmens oder an einem mit dem Haltelappen fest verbundenen Ansatz befestigt ist, welcher von der Schwenkachse (x-x) des Schaltorgans (8) durchdrungen wird.

5. Einrichtung nach einem der Ansprüche 1 bis 4, dadurch gekennzeichnet, daß der Anschlag durch eine am Umfang eines Ringes (21) angeordnete Zunge (22) gebildet ist, wobei der Ring (21) von der Schwenkachse (x-x) des Schaltorgans (8) durchdrungen wird.

6. Einrichtung nach einem der Ansprüche 1 bis 5, dadurch gekennzeichnet, daß eine bezüglich des Haltelappens (1) des Rahmens feste Rinne zur Führung des das bewegliche Teil (9) des Schaltorgans (8) betätigenden Kabelzuges (41) vorgesehen ist, und daß die Anschlagfläche (36) in der Arbeitsstellung eine Haltefunktion für den festen Teil (12) des Schaltorgans hat.

7. Einrichtung nach Anspruch 6, dadurch gekennzeichnet, daß die Rinne (43) zur Führung des Kabelzuges (41) an einem Teil ausgebildet ist, welches von der Schwenkachse (x-x) des Schaltorgans (8) durchdrungen wird.

## Claims

1. A device for mounting on the lug (1) of the frame of a cycle, a chain derailleur (8) which is pivoted about an axis (X-X), parallel to the wheel spindle and carried by the frame lug, and is based toward an operative position defined by the contact of an abutment (22) rigid with the derailleur, with a support surface (33) fixed relative to the frame lug, characterized in that during the angular displacement of the derailleur (8) in the direction which moves the abutment (22) away from the support surface (33), the abutment (22) coacts with means (34, 26) fixed relative to the frame lug, which are adapted for resiliently retaining the abutment (22) in a retracted position in which the derailleur is spaced from its operative position and immobilized, so as to give access to the rear wheel spindle mounted on the frame lug (1).

2. A device according to claim 1, characterized in that in the operative position the abutment is, on the opposite side to the support surface, adjacent a stop surface (36) formed in a resilient strip (26) having a generally circumferential orientation with respect to the pivot axis (7) of the derailleur (8), which is rigid with the lug (1) and defines by its concavity a cavity (38) in which may be retained the abutment (22) upon the displacement thereof in the direction which moves it away from the support surface (33), under the effect of the deformation of and the passage alongside, the stop surface due to the circumferential thrust exerted by the abutment.

3. A device according to claim 2, characterized in that the stop surface is constituted of one of the ramp shaped edges (36) of a boss (34) formed on the resilient strip (26), the sliding of the abutment (22) contacting said ramps, in one direction or the other, causing a deformation of the strip which allows passage of the abutment.

4. A device according to claim 2 or 3, wherein the resiliently yieldable strip (26) is carried by a retaining member (24) fixed to the frame lug (1) or to a support integral with said lug, the pivot axis (X-X) of the derailleur (8) extending through the retaining member (24).

5. A device according to any one of the claims 1 to 4, wherein the abutment is constituted by a tab portion (22) formed on the periphery of a washer (21) through which the pivot axis (X-X) of the derailleur (8) extends.

6. A device according to any one of the claims 1 to 5, comprising a channel (43) which is fixed relative to the frame lug (1) for guiding the bare cable (41) controlling a moving part (9) of the derailleur (8), said stop surface (36) having, in said operative position, a retaining function with respect to a fixed part (12) of the derailleur.

7. A device according to claim 6, wherein the channel (43) for guiding the cable (41) is formed in a member through which the pivot axis (X-X) of the derailleur (8) extends.

FIG. 1

FIG. 2

FIG.3

FIG.4